Europäisches Patentamt

European Patent Office

Office européen des brevets

(19)

(11) Numéro de publication : **0 154 099**
**B1**

(12) **FASCICULE DE BREVET EUROPÉEN**

(45) Date de publication du fascicule du brevet :
**02.11.89**

(51) Int. Cl.⁴ : **G 01 N 27/56**

(21) Numéro de dépôt : **84440066.3**

(22) Date de dépôt : **07.12.84**

(54) **Matériau composite utilisable dans la réalisation des capteurs d'oxygène.**

(30) Priorité : **16.12.83 FR 8320322**

(43) Date de publication de la demande :
**11.09.85 Bulletin 85/37**

(45) Mention de la délivrance du brevet :
**02.11.89 Bulletin 89/44**

(84) Etats contractants désignés :
**AT BE CH DE FR GB IT LI LU NL SE**

(56) Documents cités :
**FR—A— 1 563 650**
**FR—A— 2 426 339**
**GB—A— 1 200 439**
**GB—A— 1 474 246**
**GB—A— 2 022 842**
**GB—A— 2 082 156**
**US—A— 3 400 054**
**US—A— 4 138 881**
**US—A— 4 328 296**

(73) Titulaire : **ELECTRICITE DE FRANCE Service National**
**2, rue Louis Murat**
**F-75008 Paris (FR)**

(72) Inventeur : **Gouet, Michel**
**5 passage du Chemin Vert**
**F-75011 Paris (FR)**
Inventeur : **Goge, Marianne**
**11 rue du Chemin Vert**
**F-94100 Saint Maur (FR)**
Inventeur : **Especel, Dominique**
**135 rue de Charenton**
**F-75012 Paris (FR)**

(74) Mandataire : **Fort, Jacques et al**
**CABINET PLASSERAUD 84, rue d'Amsterdam**
**F-75009 Paris (FR)**

## Description

On sait que la mise en solution solide, dans des oxydes de certains métaux tétravalents (Zr, Ce, Th, Hf), d'autres oxydes dont le métal est à un degré d'oxydation plus faible (Ca, Mg, terres rares telles que Y, Sc, Sm, Pr), s'accompagne de la formation de lacunes anioniques, qui confèrent à ladite solution solide une conductivité ionique par l'oxygène extrêmement sélective, qui fait que l'on peut assimiler ce matériau à un véritable électrolyte solide.

Ainsi, lorsque les deux faces d'un tel matériau sont exposées à des pressions d'oxygène différentes, il apparaît entre elles une différence de potentiel. A l'inverse, l'application à ce matériau d'un courant électrique par deux électrodes extérieures détermine à travers le solide un véritable « pompage » d'oxygène, dont le débit est proportionnel à l'intensité du courant appliqué.

Cette propriété a déjà fait l'objet d'applications au dosage de l'oxygène ; de tels dispositifs sont connus sous le nom de capteurs potentiométriques, dont la réponse, entre 700 et 900 °C est idéale : précision de 1 % entre 1 et $10^{-8}$ atm. Ils sont utilisés surtout pour le contrôle et l'asservissement de la richesse du mélange air-carburant dans les moteurs automobiles et en métallurgie.

Toutefois cet intervalle relativement étroit de températures de fonctionnement limite encore les applications de ces matériaux. En effet, alors qu'une température d'utilisation plus basse serait souhaitable pour de nombreux usages, on a constaté qu'une diminution de température se heurte d'une part à la forte résistivité de ce matériau à basse température et d'autre part à un ralentissement de la cinétique des réactions d'oxydo-réduction au niveau des électrodes. Il en résulte qu'au-dessous d'environ 600 °C les temps de réponse de ces dispositifs deviennent excessifs, et qu'ils provoquent alors des erreurs, imputables à des phénomènes complexes et mal contrôlés entre les phases en présence aux électrodes.

Certains chercheurs ont tenté de pallier ces inconvénients en sélectionnant les matériaux et en améliorant la morphologie des électrodes, mais sans atteindre jusqu'à présent de résultats industriellement utilisables. Toutefois, on peut admettre que, lors des processus complexes et mal connus de transfert de charge aux interfaces entre les trois phases en présence aux électrodes (solution solide « électrolyte », électrode métallique et oxygène gazeux), la cinétique de la réaction électrochimique, et par suite le courant électrique traversant l'interface sont limités par le processus le plus lent, lequel est lié à la pression d'oxygène. En d'autres termes les interfaces électrodes-électrolyte-gaz présentent au passage d'un courant électrique une résistance, que l'on désigne par « résistance d'électrode » et qui dépend de la pression d'oxygène, selon une relation qui est fonction de nombreux paramètres, mais qui, pour un couple électrolyte-électrode donné et une microstructure donnée, est bien définie et reproductible.

La présente invention vise un nouveau matériau composite du genre métal-électrolyte solide et grâce auquel une telle relation est particulièrement favorable aux applications qui jusqu'ici étaient interdites à ce genre de matériau.

A cet effet l'invention consiste en un matériau du genre précité, mais comportant deux phases, dont l'une présente une conductivité ionique et l'autre une conductivité électronique. En d'autre termes l'invention vise un nouveau matériau composite comportant d'une part de façon connue dans US-A-3.400.054 des particules d'un électrolyte solide constitué d'une solution solide d'oxydes de métaux bivalents ou trivalents dans des oxydes de métaux tétravalents, et d'autre part des particules d'un métal, l'ensemble des ces particules étant dispersées de manière aléatoire à l'état non jointif et par cuisson ou frittage, soit seules, soit au sein d'un matériau liant non-conducteur.

Plus particulièrement, l'électrolyte solide étant considéré comme connu, par exemple une zircone yttriée, le métal sera de préférence, tel que le platine, l'or, le palladium ou l'argent, dans une proportion pouvant aller jusqu'à 80 % en poids, et de préférence d'environ 40 à 50 % en poids.

Il convient de noter que, dans le brevet des Etats-Unis d'Amérique N° 4.138.881 est décrit un système apparemment assez voisin et dans lequel est exploité le même phénomène :

Un courant électrique ne peut traverser une interface métal/oxyde ou oxyde/métal que s'il se produit une réaction électrochimique du type

$$4\,e^{-} + O_2 \underset{(2)}{\overset{(1)}{\rightleftharpoons}} 2\,O^{(2-)}$$

Une telle réaction exige la présence du métal (qui apporte ou évacue les électrons), de l'oxyde (qui apporte ou évacue les ions oxygènes), mais aussi d'oxygène, tout au moins dans le sens (1). On a constaté que la vitesse de cette réaction, et par suite le courant électrique global, est fonction de la pression partielle de cet oxygène.

Ce phénomène est exploité dans le brevet US précité pour déterminer le passage d'un courant électrique à température élevée entre une couche d'un électrolyte solide et une couche poreuse de cermet en présence d'oxygène dans l'atmosphère environnante. Si on impose alors une tension continue entre les deux extrémités d'une telle structure, et que le courant, pour la traverser, doive passer par des interfaces métal/oxyde, son intensité sera limitée par la cinétique de réaction aux interfaces, et donc dépendra de la pression partielle d'oxygène : le système peut donc servir à mesurer des variations de cette pression, ce qui est bien également le but visé dans la présente invention.

Toutefois la technique utilisée dans ce brevet US se distingue fondamentalement de celle de la présente invention, sur les points suivants :

1. Le cermet utilisé dans le système du brevet US exige une teneur en métal suffisante pour que la conduction métallique (électronique) soit continue : la conductivité de la couche cermet est donc de nature métallique, c'est-à-dire que le métal doit avoir « percolé » le matériau céramique.

Au contraire, dans la présente invention, le métal contenu dans le cermet est formé de microparticules non jointives, et ne peut donc pas constituer un cheminement continu pour le courant électrique. Ce courant pour passer d'une particule à l'autre, doit successivement être de nature électronique et ionique, et c'est précisément le passage du courant de la forme ionique à la forme électronique et inversement qui est exploité dans la présente invention, qui utilise un cermet non percolé par le métal.

2. Le système du brevet US exige un support conducteur ionique (électrolyte solide), en plus du cermet. Au contraire, dans la présente invention, il est inutile d'utiliser un électrolyte solide en plus de celui qui est inclus dans la composition du cermet, même si l'on peut prévoir éventuellement un support pour le cermet, et que ce support puisse alors être de même nature que l'électrolyte que contient le cermet : de toutes façons ce support ne joue aucun rôle dans le fonctionnement du capteur.

Il est donc important de noter que c'est la microstructure du cermet qui est sensible en elle-même, même sans support, car cette structure impose une multiplication des traversées d'interfaces métal/oxyde par le courant, la résistance de ces interfaces étant le paramètre dépendant de la pression d'oxygène, sur lequel repose le fonctionnement du système selon l'invention.

Dans la réalisation de cette microstructure, la taille des particules reste dans les intervalles usuels pour les particules dites microscopiques, étant bien entendu que la multiplication des interfaces métal-électrolyte, dont chacune joue le rôle d'une cellule électro-chimique, aboutit à une conduction pseudo-ionique par l'oxygène, donc dépendant de la pression d'oxygène. C'est sur ce phénomène que repose la présente invention pour la réalisation de capteurs à oxygène : alors que la conductivité électrique de chacun des constituants pris individuellement est insensible à la pression d'oxygène, la nécessité de réactions électrochimiques dépendant du potentiel oxygène au niveau de chaque interface pour assurer le transport du courant rend celle de l'ensemble dépendante de la présence d'oxygène. La variable exploitée est la résistance apparente d'un ensemble constitué par un grand nombre de telles cellules.

On relate ci-après à titre d'exemples, la composition et le comportement de plusieurs dispositifs constitués selon l'invention :

## Exemple 1

Le dispositif est réalisé par cuisson à 1200 °C de deux électrodes constituées par des fils de platine de 0,5 mm de diamètre, séparées par une pellicule de $5 \times 5$ mm d'un matériau formé d'une dispersion de 30 % en masse de zircone yttriée (8 % molaires) et de 70 % en masse de poudre de platine dans un liant organique du type utilisé habituellement pour les sérigraphies et qui disparaît en cours de cuisson. Après cuisson on obtient le matériau mixte platine-zircone d'une porosité de 40 % environ en volume, séparant les deux électrodes de platine.

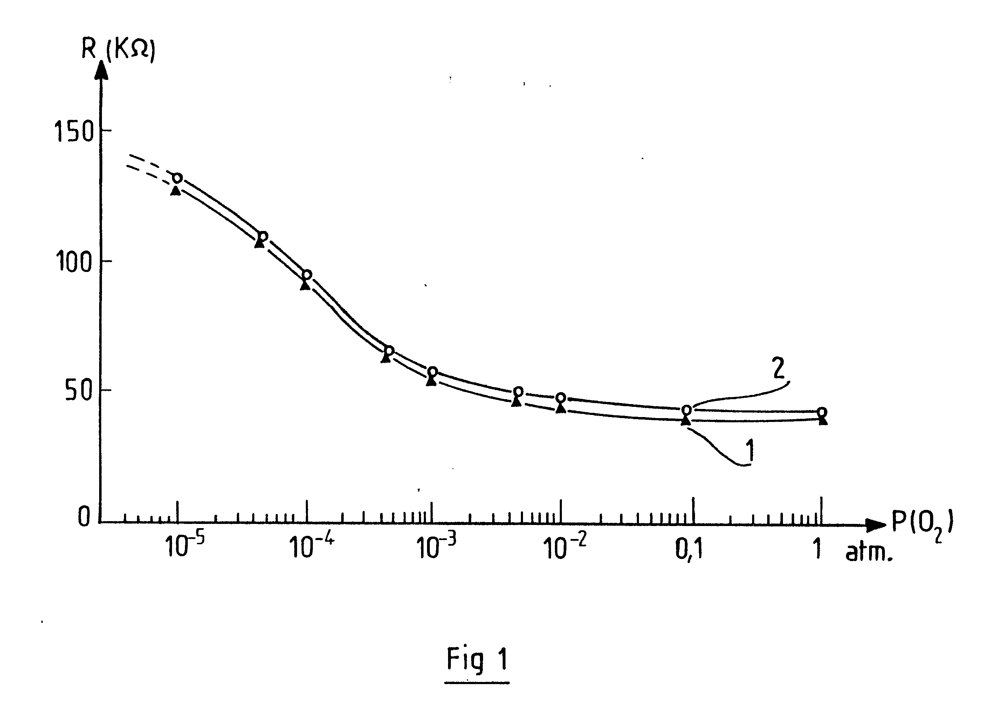

On introduit ce dispositif dans un four à atmosphère contrôlée ($O_2 + Ar$), chauffé à 800 °C, et on note sa résistance apparente sous des différences de potentiel de 2,5 v (Courbe 1), 10 v (Courbe 2)... continus. Le résultat de ces mesures apparaît sur les courbes de la figure 1. Ces courbes révèlent que si cette résistance varie très peu aux fortes pressions d'oxygène, par contre, au-dessous de 1 % elle s'accroît très rapidement, jusqu'à être multipliée par 2,5 vers $10^{-4}$ atm.

## Exemple 2

Un second dispositif est réalisé par dépôt de deux électrodes de laque de platine sur un substrat d'alumine, longues de 2 cm et écartées de 2 mm, reliées à des électrodes d'alliage nickel-chrome. Une pâte de matériau composite platine (50 % en masse)-zircone yttriée (50 % en masse) est appliquée entre les deux électrodes, puis l'ensemble est cuit à 1400 °C pendant 6 heures.

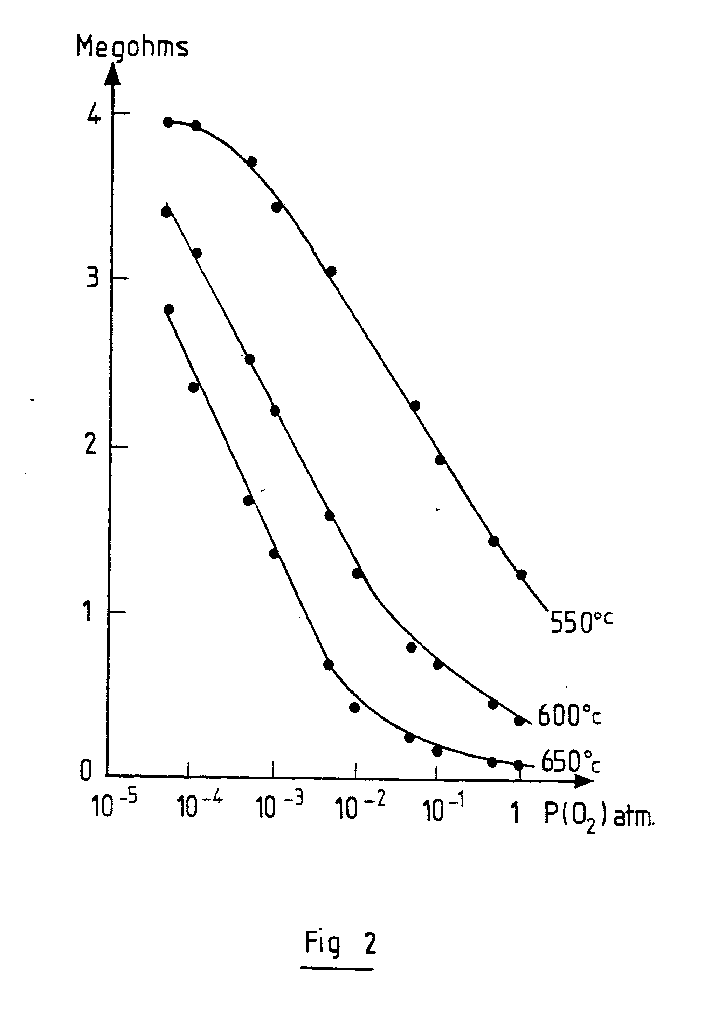

Le dispositif est alors introduit dans un four à atmosphère contrôlée comme ci-dessus, et on note sa résistance apparente, mesurée en courant continu (0,1 micro ampère) à 550, 600 et 650 °C. Les résultats présentés sur la figure 2, révèlent que, par exemple à 550 °C, la résistance croît régulièrement lorsque la pression d'oxygène diminue, augmentant notamment d'un facteur 3 entre 1 et $10^{-3}$ atmosphères.

Plusieurs balayages en pression d'$O_2$ et de nouvelles mesures après refroidissement et remise en chauffe du dispositif ont confirmé la reproductibilité de ce comportement.

## Exemple 3

Pour montrer les résultats qui peuvent être obtenus entre 350 et 500 °C avec des couches appliquées au pinceau, on a suivi le processus suivant :

A. Composition du cermet :

Poudre de zircone yttriée (88 %⁻ $ZrO_2$, 12 % $Y_2O_3$ en masse),
Passant au tamis Mesh 400
Pâte de platine pour sérigraphie : Origine Demetron.

Le platine est sous forme de paillettes de 12 microns maximum de long, la composition du liant organique (qui disparaît à la cuisson) est inconnue. La teneur exacte en platine est déterminée par calcination. Elle est de 75 % en poids.

Des mélanges sont réalisés par pesée comportant des proportions de poudre de zircone et de pâte de platine permettant d'obtenir après calcination et frittage des proportions de platine de 40,50 et 60 % (en poids).

B. Réalisation des échantillons :

Des cannes en alumine comportant huit canaux sont entaillées circulairement et revêtues de dépôts successifs de platine et de cermet de manière à comporter chacune cinq échantillons. Deux canaux sont utilisés pour un thermocouple qui constitue aussi une électrode commune, les six autres guident les six fils d'alliage nickel-chrome qui constituent une électrode commune, et la deuxième électrode de chacun des cinq échantillons.

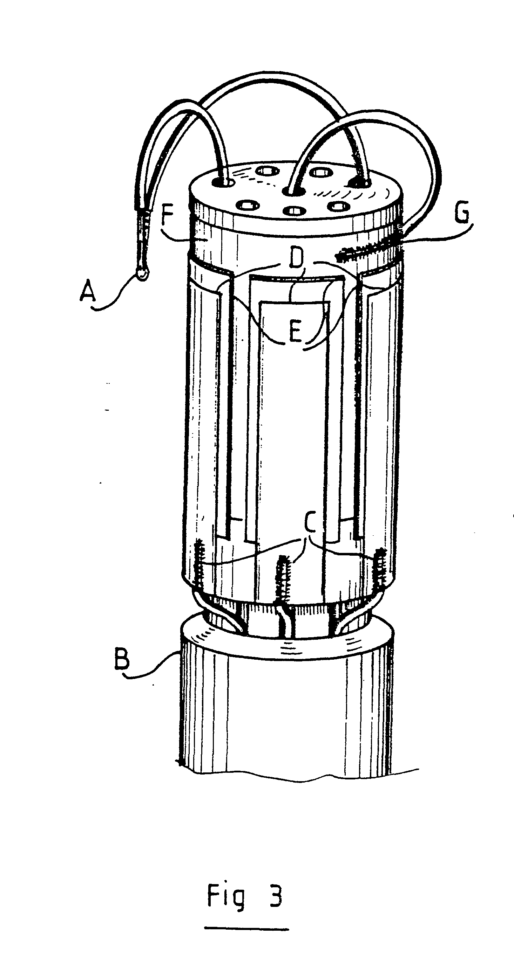

Un tel dispositif est illustré schématiquement sur la figure 3, sur laquelle :

A Thermocouple chromel-alumel
B Canne support d'alumine à huit canaux
C Electrodes soudées par une goutte de laque de platine
D Couches externes de laque de platine
E Couches de cermet à étudier
F Couche de laque de platine commune aux cinq échantillons
G Electrode commune soudée par une goutte de laque de platine.

Les surfaces d'électrodes métalliques en regard sont des rectangles de 2,5 mm sur 8 mm environ.

L'épaisseur des couches obtenues est d'environ 10 microns après cuisson. (Evaluée par pesée en supposant une porosité de 30 %).

Les premiers essais comportant une seule couche de cermet ont tous abouti à un court-circuit entre les électrodes métalliques extrêmes.

D'autres essais comportent sept dépôts successifs de cermets (0,08 mm d'épaisseur totale moyenne). La procédure de dépôt est la suivante :
— Dépôt au pinceau d'une électrode de pâte de platine, frittage de 2 h à 1450 degrés.
— Trois doubles dépôts de pâte de cermet, avec séchage en étuve à 200 degrés pendant une heure après chaque dépôt, et frittage à 1450 degrés pendant 2 heures tous les deux dépôts.
— Un dépôt d'une couche de cermet, suivie d'un séchage puis du dépôt de l'électrode extérieure en pâte de platine, et enfin séchage et frittage à 1450 degrés pendant 5 heures.

Dans ces conditions les échantillons ne sont pas court-circuités, sauf parfois ceux qui contiennent 60 % de platine (deux sur cinq), et l'adhérence des différentes couches est parfaite.

Des électrodes en fil d'alliage nickel-chrome (diamètre 5/10 mm) sont alors introduites dans les canaux de la canne d'alumine, mis en contact avec les couches extrêmes de platine, et collées par une goutte de pâte de platine. Le dispositif est alors introduit dans le four de mesure, porté à 1000 degrés dans l'air pendant 12 heures, ce qui scelle les électrodes, et étudié du point de vue électrique.

C. Influence de la pression d'oxygène sur la résistance apparente :

Les mesures se font dans un four régulé en température, dans des atmosphères de mélange d'azote et d'oxygène de compositions variables.

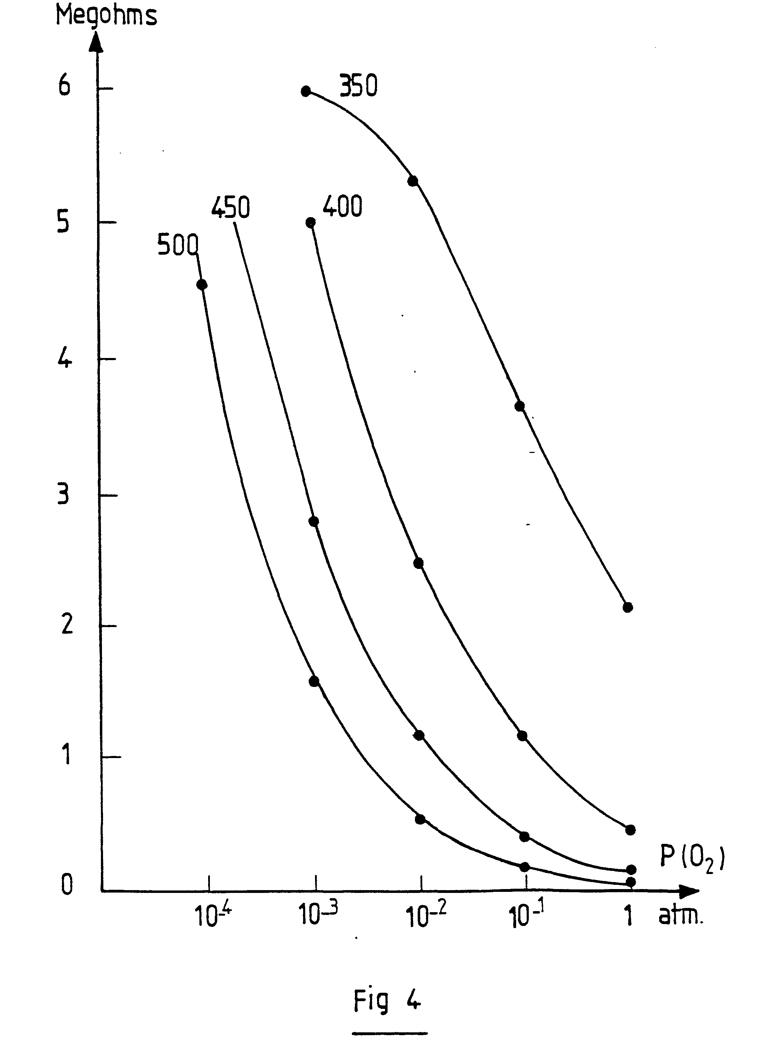

Les courbes de la figure 4 montrent l'évolution typique de la résistance apparente, pour un échantillon contenant 40 % de platine en poids. Tous les autres échantillons, à l'exception de ceux qui sont court-circuités, montrent un comportement semblable, les résistances variant cependant de 50 % selon l'échantillon, ce qui est explicable par la faible reproductibilité des dépôts au pinceau. Cependant les variations relatives des résistances avec la pression d'oxygène sont identiques et ne dépendent pas en particulier de la composition des échantillons dans la fourchette essayée.

D. Influence de la température sur la résistance.

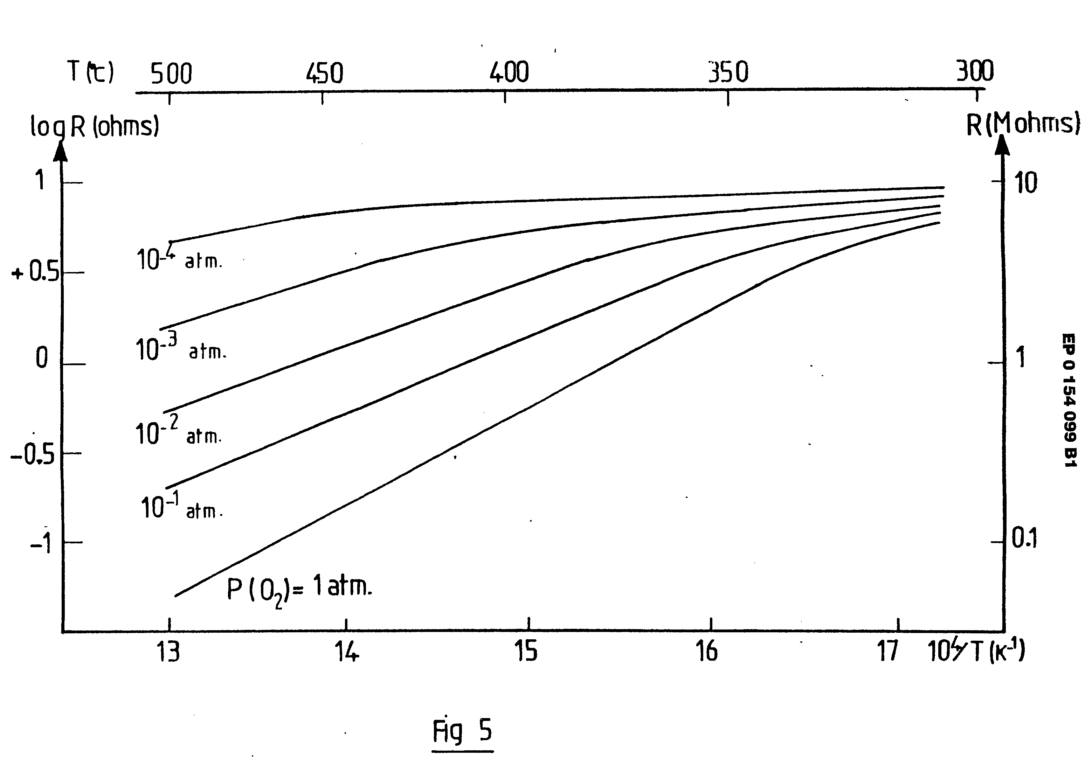

Les courbes de la figure 5 montrent l'influence de la température sur la résistance pour les pressions d'oxygène testées. Les réactions électrochimiques ainsi que de nombreux phénomènes de diffusion sont des processus activés thermiquement, dont la cinétique est le plus souvent proportionnelle à exp($-E/kT$). C'est pourquoi on a représenté le logarithme de la résistance en fonction de l'inverse de la température, et effectivement nous obtenons sensiblement des droites pour des températures supérieures à 350 degrés et aux fortes pressions d'oxygène.

Aux plus basses températures les courbes se rapprochent, ce qui signifie qu'alors le phénomène limitant la conduction ne dépend plus de la pression d'oxygène. Ceci montre donc une limite inférieure d'utilisation vers 300 degrés, avec les matériaux et la géométrie étudiés.

### E. Influence de la tension électrique de mesure.

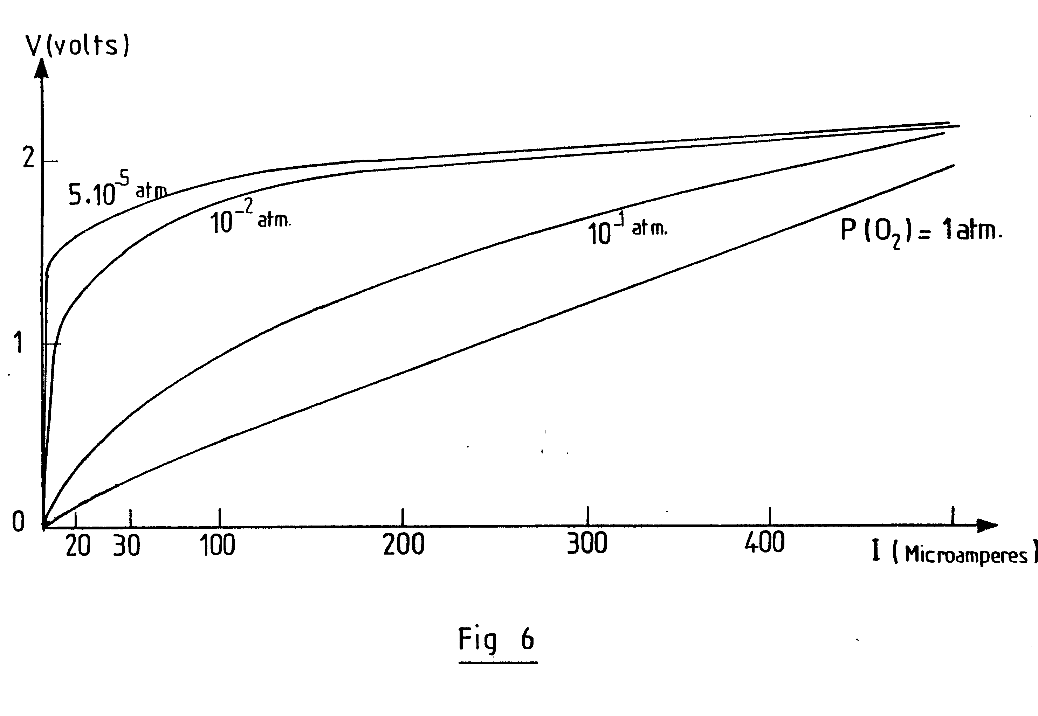

Les courbes de la figure 6 montrent que le comportement du matériau n'est pas linéaire. Au-delà de 1,5 à 2 Volts à 400 degrés il commence à y avoir une électrolyse de la zircone. Ces courbes montrent que la tension de mesure, avec la composition et la géométrie essayés, est la plus faborable dans un domaine allant de 0,5 à 1,5 volts.

### F. Analyse de l'admittance complexe des échantillons.

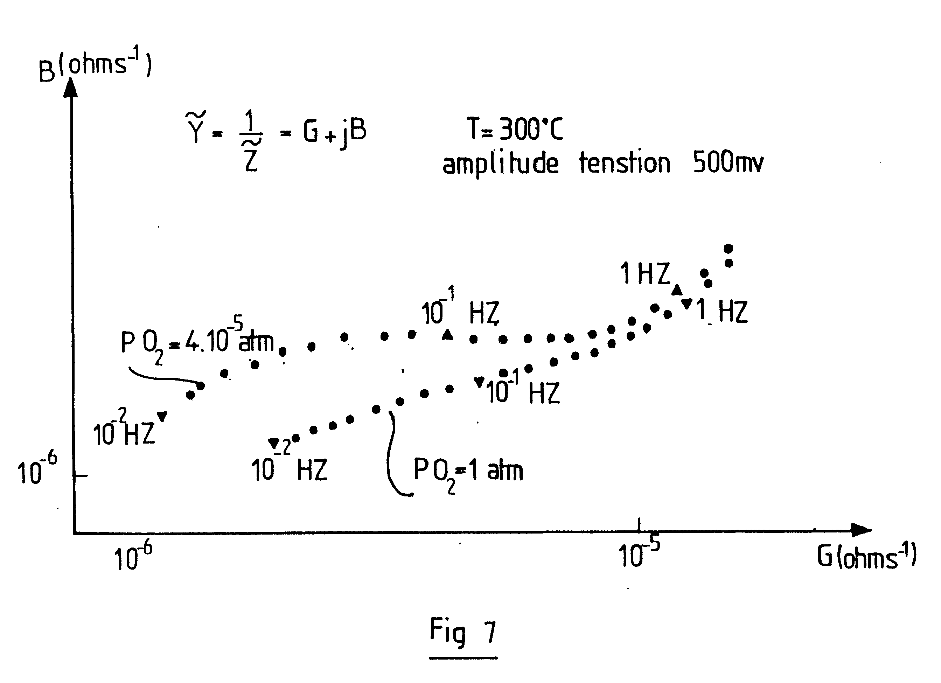

Il est possible, en représentant la partie imaginaire B de l'admittance en fonction de sa partie réelle de montrer que l'influence de la pression d'oxygène porte sur un phénomène dont le temps de réponse est à 300 degrés de l'ordre de la seconde (Voir figure 7).

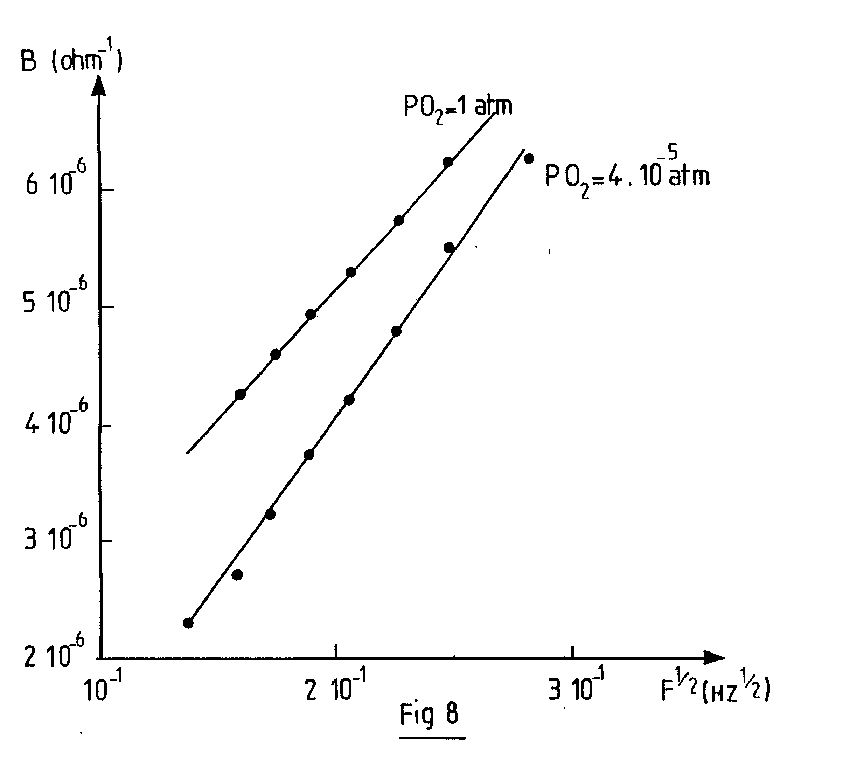

Si à température et pression d'oxygène constantes on représente la part imaginaire de l'admittance en fonction de la racine carrée de la fréquence, on peut vérifier un comportement dit « de Warburg » par les électrochimistes, caractéristique d'une limitation par un phénomène de diffusion d'une espèce chimique, sans que l'on puisse actuellement préciser laquelle. La figure 8 montre un exemple pour un échantillon contenant 40 % de platine en masse, à 300 degrés entre $4.10^{-5}$ et 1 atm. d'oxygène.

Ce nouveau matériau composite présente donc une variation relative considérable de l'équivalent de la conductivité en courant continu avec la pression d'oxygène. Cela permet la réalisation de capteurs d'oxygène extrêmement simples et susceptibles de fonctionner à des températures modérées. Ainsi, de tels capteurs seront adaptés à des applications aux brûleurs de petite et moyenne puissance et au contrôle de la carburation des moteurs à explosions. Les tensions de mesure, de quelques volts, sont bien adaptées aux impératifs de sécurité, d'insensibilité aux perturbations parasites extérieures et de simplification du dispositif d'exploitation du signal.

Toutes les méthodes de réalisation de résistances électriques sont applicables à la fabrication des dispositifs selon l'invention pourvu que la distance entre les électrodes métalliques soit suffisante pour comporter un grand nombre de cellules élémentaires : pastilles, perles, sérigraphies et analogues.

Les cellules électrochimiques sont réalisées par cuisson ou frittage d'un mélange de particules microscopiques du métal et de la solution solide d'oxydes (ou des oxydes qui la composent) selon les méthodes habituelles de la métallurgie des poudres, ou par dépôt au pinceau ou par sérigraphie d'une couche épaisse d'un mélange des constituants, suivi d'une cuisson ou d'un frittage.

Dans ces conditions, la répartition des microcellules est aléatoire au niveau microscopique, mais le comportement macroscopique est reproductible et reflète l'influence de la pression d'oxygène sur la cinétique des échanges aux contacts triples gaz-métal-oxyde ou aux contacts doubles métal-oxyde.

Comme oxydes conducteurs ioniques par les ions oxygènes, on peut citer les oxydes de structure fluorine lacunaire tel que zircone, thorine, hafnie ou cérine ou leurs solutions solides, auxquelles ont été incorporés un ou plusieurs oxydes lui conférant cette conductivité : oxyde de terre rare, chaux, magnésie, oxyde de bismuth... L'ensemble peut être poreux ou non.

Les avantages des dispositifs selon l'invention sont essentiellement de deux ordres :

En premier lieu, ceux qui sont liés à leur fonctionnement à basse température, de l'ordre de 300 à 600 °C : facilité du contrôle de la température, consommation énergétique minimum, d'où possibilité d'usages mobiles, mise en route pratiquement instantanée, possibilité de dosage de gaz hors d'un équilibre établi, matériaux annexes et technologie peu coûteux.

En second lieu, ceux qui sont liés à la miniaturisation aisée de ces dispositifs : là également on peut noter la consommation énergétique minime, mais aussi : inertie thermique faible, d'où la commodité d'usages intermittents, résistance élevée aux chocs thermiques, temps de réponse réduit, faible teneur en matériaux « précieux ».

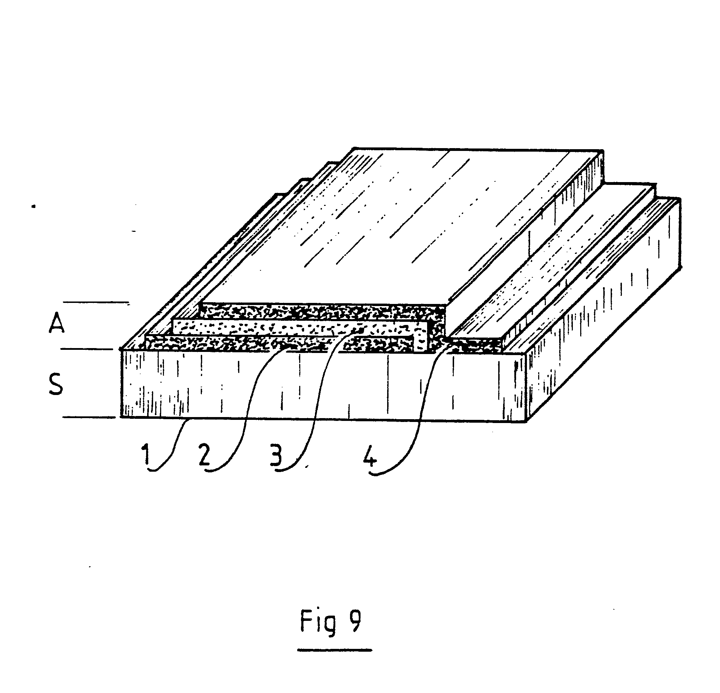

Ainsi, on a représenté à titre d'exemple de réalisation pratique sur la figure 9 comment se présente un dispositif selon l'invention. Sur ce dessin, les références ont les significations suivantes :

A : zone sensible à la pression d'oxygène
B : zone support, n'ayant qu'un rôle mécanique
1 substrat, en alumine (pouvant être en zircone)
2 électrode inférieure métallique ou en cermet percolé (forte teneur en métal)
3 cermet métal/électrolyte (métal non percolé)
4 électrode supérieure métallique ou en cermet percolé (forte teneur en métal)
(3 et 4 doivent être poreux).

Au surplus, on peut ajouter à ces avantages : structure simple, absence de joints, d'assemblages et de réglages, exploitation facile du signal, fiabilité, fabrication en grande série et à coût modéré possible par des méthodes simples et éprouvées.

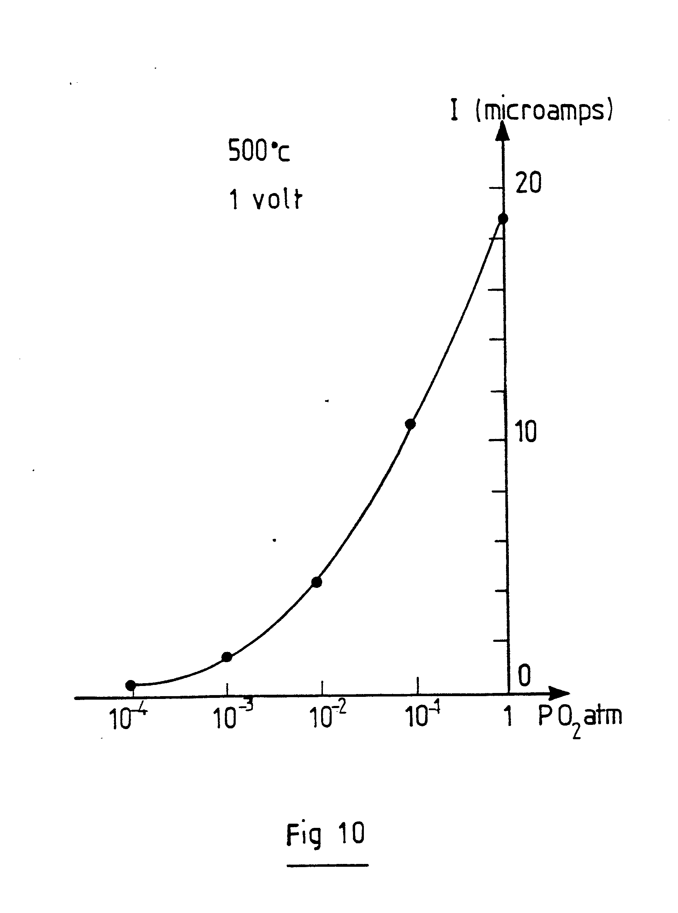

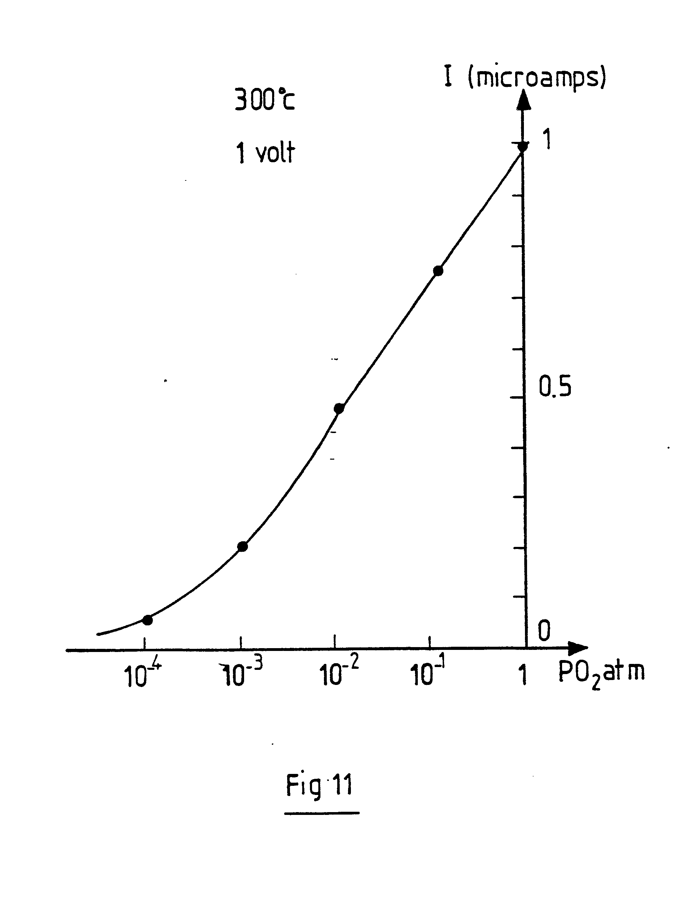

Enfin, les figures 10 et 11 illustrent les résultats obtenus au moyen de jauges selon l'invention entièrement sérigraphiées sur un substrat d'alumine, selon le processus suivant :

Encres de départ :

Encre de platine fabrication EMCAR (Angleterre) commercialisée par Comatel. Lot 2GO 90 884, contenant 70 % en poids de platine.

Encre de cermet fabriquée au laboratoire de la déposante en mêlant intimement de la zircone (stabilisée par 12 % d'yttrium en masse, d'origine Zircar), et de l'encre de platine ci-dessus dans des proportions convenables pour obtenir après cuisson et élimination du liant organique une teneur en masse de 50 % de platine et de 50 % de zircone.

Le dépôt se fait à travers un masque de dimensions 6 × 17 mm, décalé selon la nature des couches appliquées, la surface active (part en regard des deux électrodes métalliques) étant de 44 millimètres carrés.

Les dépôts successifs sont les suivants :
— deux couches d'encre de platine suivies de séchages (1 heure à 200 degrés),
— cuisson 1150 degrés, 30 minutes
— quatre couches cermet, suivies chacune de séchage (1 heure 200 degrés) et de cuisson (1450 degrés, 15 minutes),
— cuisson de l'ensemble 1450 degrés, 5 heures,
— deux couches d'encre de platine suivies de séchage (1 heure à 200 degrés), et cuisson à 950 degrés, 30 minutes.

On obtient ainsi une structure « sandwich » constituée d'une couche de cermet non percolé, d'épaisseur 20 microns environ (dépôt de 20 mg de cermet), entre deux électrodes continues de platine d'épaisseur 4 µm environ (dépôt 8 mg environ).

Des fils sont liés aux électrodes extrêmes et l'ensemble est introduit dans le dispositif de mesure déjà décrit (four à atmosphère contrôlée de mélanges azote + oxygène).

Les mesures électriques reportées sur les courbes des figures 10 et 11 sont effectuées sous tension continue de 1 volt, et l'intensité est mesurée, l'électrode supérieure étant positive.

On constate ainsi que l'augmentation de la surface permet de diminuer les résistances d'un facteur d'au moins 50, ce qui autorise l'exploitation aussi basse que 300 °C.

## Revendications

1. Matériau composite sensible à de faibles variations de la pression d'oxygène à basse température, du type comportant des particules microscopiques d'un conducteur ionique par l'ion oxygène consistant en une solution solide, dans des oxydes de métaux tétravalents, d'oxydes d'autres métaux à valence inférieure à quatre, caractérisé en ce qu'il comprend en outre des particules microscopiques non jointives d'un conducteur électronique métallique.

2. Matériau selon revendication 1, caractérisé en ce que le conducteur électronique métallique est un métal choisi entre le platine, l'or, la palladium, l'argent et leurs alliages.

3. Matériau selon revendications 1 et 2, caractérisé en ce qu'il est réalisé par cuisson ou frittage desdites particules microscopiques.

4. Matériau selon revendications 1 à 3, caractérisé en ce que la cuisson est réalisée au sein d'un liant de mise en forme non conducteur, qui disparaît lors de cette cuisson.

5. Matériau selon les revendications 1 à 4, caractérisé en ce qu'il est déposé sur un support tel que l'alumine ou la zircone.

6. Application du matériau selon revendications 1 à 5, à la réalisation des capteurs d'oxygène, notamment à basse température, notamment pour le contrôle et l'asservissement de la richesse du mélange air-carburant dans les moteurs d'automobiles et en métallurgie.

## Claims

1. Composite material sensitive to weak variations of oxygen pressure at low temperature, of the type comprising microscopic particles of an oxygen ion ionic conductor consisting of a solid solution of oxides of metals whose valence is lower than four in oxides of other metals which are tetravalent, characterized in that it further comprises microscopic non-jointing particles of a metallic electronic conductor.

2. Material according to claim 1, characterized in that the metallic electronic conductor is a metal selected from platinum, gold, palladium, silver and alloys thereof.

3. Material according to claims 1 and 2, characterized in that it is obtained by firing or sintering of said microscopic particles.

4. Material according to claims 1-3, characterized in that firing is carried out within a non-conductive shaping carrier which disappears during firing.

5. Material according to claims 1-4, characterized in that it is deposited on a support such as alumina or zirconia.

6. Application of the material according to claims 1-5 to the manufacture of oxygen sensors, particularly at low temperature, particularly for control and servo-control of the air-fuel ratio of the air-fuel mixture in automotive engines and for metallurgy.

**Patentansprüche**

1. Auf geringe Änderungen des Druckes von Sauerstoff bei niedriger Temperatur ansprechendes Verbundmaterial von jenem Typus, der mikroskopische Teilchen eines Ionenleiters zufolge des Sauerstoffions enthält, bestehend aus einer festen Lösung, in Oxiden von 4-wertigen Metallen, von Oxiden anderer Metalle mit einer unter vier liegenden Wertigkeit, dadurch gekennzeichnet, daß es überdies nicht nebeneinanderliegende mikroskopische Teilchen eines metallischen Elektronenleiters umfaßt.

2. Material nach Anspruch 1, dadurch gekennzeichnet, daß der metallische Elektronenleiter ein Metall ist, das unter Platin, Gold, Palladium, Silber und deren Legierungen ausgewählt ist.

3. Material nach den Ansprüchen 1 und 2, dadurch gekennzeichnet, daß es durch Brennen oder Sintern der genannten mikroskopischen Teilchen gebildet ist.

4. Material nach den Ansprüchen 1 bis 3, dadurch gekennzeichnet, daß das Brennen in einem nichtleitenden formgebenden Bindemittel ausgeführt wird, das bei diesem Brennen verschwindet.

5. Material nach den Ansprüchen 1 bis 4, dadurch gekennzeichnet, daß es auf ein Substrat wie Aluminiumoxid oder Zirkonoxid aufgebracht ist.

6. Anwendung des Materials nach den Ansprüchen 1 bis 5 zur Ausbildung von Sauerstoffsensoren, insbesondere bei niedriger Temperatur, insbesondere zur Untersuchung und Regelung des Gehaltes des Luft/Treibstoff-Gemisches in Kraftfahrzeugmotoren und in der Metallurgie.

Fig 1

EP 0 154 099 B1

Fig 2

Fig 3

Fig 4

Fig 5

Fig 6

$$\widetilde{Y} = \frac{1}{\widetilde{Z}} = G + jB$$

T=300°C
amplitude tension 500mv

B(ohms⁻¹)

G(ohms⁻¹)

1HZ

1 HZ

$10^{-1}$ HZ

$10^{-1}$ HZ

$PO_2 = 1$ atm

$10^{-2}$ HZ

$PO_2 = 4.10^{-5}$ atm

$10^{-2}$ HZ

$10^{-6}$

$10^{-6}$

$10^{-5}$

Fig 7

Fig 8

A

S

1    2    3    4

Fig 9

500°c

1 volt

I (microamps)

Fig 10

Fig 11